# FASCICULE DE BREVET EUROPEEN

(11) **EP 1 215 008 B1**
(45) Date de publication et mention de la délivrance du brevet: **14.06.2006**
(21) Numéro de dépôt: 01402997.9
(22) Date de dépôt: 22.11.2001
(51) Int. Cl.: B23K 26/14, B23K 26/073, B23K 26/067

(54) **Procédé et installation de coupage laser avec tête de découpe à double flux et double foyer**
Verfahren und Einrichtung zum Laserschneiden mit einem zweiflüssigen Doppelfokusschneidkopf
Process and installation for laser cutting with a double stream and double-focus cutting head

(30) Priorité: 13.12.2000 FR 0016219
(43) Date de publication de la demande: 19.06.2002
(73) Titulaire: L'AIR LIQUIDE, Société Anonyme à Directoire et Conseil de Surveillance pour l'Etude et l'Exploitation des, 75321 Paris Cedex 07 (FR)
(72) Inventeur: Bertez, Christophe, 95450 Vaureal (FR)
(74) Mandataire: Pittis, Olivier

(56) Documents cités:
- EP-A- 0 757 932
- EP-A- 1 020 249
- DE-A- 2 713 904
- DE-A- 4 034 745
- US-A- 5 231 262
- PATENT ABSTRACTS OF JAPAN vol. 005, no. 206 (M-104), 26 décembre 1981 (1981-12-26) & JP 56 122690 A (NEC CORP), 26 septembre 1981 (1981-09-26)
- PATENT ABSTRACTS OF JAPAN vol. 013, no. 237 (M-833), 5 juin 1989 (1989-06-05) & JP 01 048692 A (MITSUBISHI HEAVY IND LTD), 23 février 1989 (1989-02-23)

## Description

La présente invention concerne un procédé et une installation de coupage par faisceau laser utilisant un dispositif laser comportant une tête de découpe laser à double flux de gaz d'assistance et double foyer de focalisation du faisceau laser.

Dans l'industrie, il est bien connu d'utiliser un faisceau laser pour couper ou souder une ou des pièces métalliques. A ce titre, on peut citer les documents DE-A-2713904, DE-A-4034745, JP-A-01048692, JP-A-56122690, WO 97/34730, JP-A-01005692, DE-A-4123716, JP-A-02030389, US-A-4,871,897, JP-A-230389, JP-A-62104693, JP-A-15692, JP-A-15693, JP-A-15694, JP-A-220681, JP-A-220682, JP-A-220683, WO-A-88/01553, DE-A-3619513 et DE-A-3934920.

Une alternative aux procédés existants est proposée par le document WO-A-98/14302 qui enseigne un procédé de coupage d'une pièce métallique par mise en oeuvre d'un moyen optique transparent ou réfléchissant, c'est-à-dire miroir ou lentille, pour focaliser un faisceau laser en plusieurs points de focalisation distincts l'un de l'autre et situés sur un même axe et ayant des angles de convergence différents.

Par ailleurs, il est connu que la découpe des aciers de constructions en utilisant de l'oxygène ou un mélange gazeux en contenant en tant que gaz d'assistance génère des oxydes sur les faces de coupe, ce qui empêche la tenu en peinture des pièces coupées de cette façon.

Pour tenter de résoudre ce problème, il existe actuellement deux solutions.

La première solution consiste à brosser les pièces après chaque découpe, ce qui est long et fastidieux.

La deuxième solution est de découper les pièces sous azote à haute pression, typiquement de l'ordre de 10 à 20 bars, ce qui implique un coût élevé du fait de la consommation importante d'azote, des vitesses de coupe faibles et une limitation au niveau des épaisseurs pouvant être coupées.

En outre, dans le cas des aciers inoxydables ou de l'aluminium revêtu, la présence habituelle d'un film plastique en surface, destiné à leur assurer une protection, engendre souvent des bavures ou empêche le déroulement correct de l'opération de découpe.

Cela qui implique alors soit de choisir un revêtement plastique adapté à la découpe laser, mais ceux-ci sont encore rares aujourd'hui et coûteux, soit d'effectuer une première passe de vaporisation, c'est-à-dire un brûlage superficiel de la couche plastique par laser, avant la découpe proprement dite du matériau, ce qui complique le procédé et nuit à la productivité.

Par ailleurs, le document US-A-5,231,262 propose un procédé de coupage laser particulier pour découper des disques dans les feuilles de film destinées à constituer des supports d'informations. Selon ce procédé, un générateur laser permet de générer un faisceau laser qui est sous-divisé en deux sous-faisceaux dont l'un sert à repérer le centre du disque à couper et dont l'autre sert à opérer le coupage proprement dit.

Le but de la présente invention est alors de résoudre les problèmes susmentionnés en proposant un procédé de coupage ou soudage par faisceau laser amélioré, c'est-à-dire qui autorise notamment une découpe des aciers de construction en minimisant ou éliminant la couche d'oxydes qui se forme lorsque ceux-ci sont découpés sous gaz oxydant et qui permette une découpe des aciers inoxydables revêtus d'un film plastique mais en évitant de réaliser une première passe de vaporisation avant la découpe proprement dite.

L'invention porte alors sur une installation de coupage ou de soudage par faisceau laser comprenant :
- au moins un générateur laser pour générer au moins un faisceau laser principal,
- un premier moyen optique permettant de diviser ledit faisceau laser principal en au moins deux faisceaux laser annexes,
- au moins une première buse de sortie traversée par au moins l'un desdits faisceau laser annexes,
- au moins une deuxième buse de sortie traversée par au moins l'autre desdits faisceau laser annexes,
- lesdites première et deuxième buses de sortie étant approximativement coaxiales l'une à l'autre.

Selon le cas, l'installation de l'invention peut comprendre l'une ou plusieurs des caractéristiques suivantes :
- le faisceau central traverse la première buse de sortie et le faisceau périphérique traverse la deuxième buse de sortie.
- le premier moyen optique et le deuxième moyen optique sont agencés coaxialement l'un par rapport à l'autre.
- ledit premier moyen optique permet de diviser le faisceau laser principal en un faisceau central et un faisceau périphérique de forme annulaire ou cylindrique, et de focaliser ledit faisceau central en un point de focalisation et, par ailleurs, un deuxième moyen optique permet de focaliser le faisceau périphérique en une zone de focalisation de forme annulaire distincte du point de focalisation.
- elle comporte une première source de gaz d'assistance alimentant la première buse de sortie et/ou une deuxième source de gaz d'assistance alimentant la deuxième buse de sortie.
- le premier moyen optique et/ou le deuxième moyen optique sont transparents ou réfléchissants, de préférence le premier moyen optique et/ou le deuxième moyen optique sont des lentilles.

L'invention porte aussi sur un procédé de coupage ou soudage d'au moins une pièce métallique, dans lequel :
(a) on génère au moins un faisceau laser principal,
(b) on divise ledit faisceau laser principal en au moins deux faisceaux laser annexes,
(c) on focalise ledit faisceau en un point de focalisation au moyen d'un premier moyen de focalisation,
(d) on focalise ledit faisceau annexe en une zone de focalisation de forme annulaire,
(e) on opère le coupage ou le soudage par fusion d'au moins une partie d'au moins une pièce au moyen desdits faisceaux annexes.
A l'étape (c), on guide l'un desdits faisceau laser annexes au travers d'une une première buse de sortie et on focalise ledit faisceau en un point de focalisation au moyen d'un premier moyen de focalisation, et à
l'étape (d), on guide l'autre desdits faisceau laser annexes au travers d'une deuxième buse de sortie agencée approximativement coaxialement à la première buse de sortie et on focalise ledit faisceau annexe en une zone de focalisation de forme annulaire.

Selon le cas, le procédé de l'invention peut comprendre l'une ou plusieurs des caractéristiques suivantes :
- il comporte au moins une des étapes supplémentaires de :
   (f) alimenter la première buse de sortie et/ou la deuxième buse de sortie avec un ou plusieurs gaz ou mélanges gazeux ;
   (g) opérer un mouvement de déplacement relatif de ou des pièces à couper ou à souder par rapport aux première buse de sortie et/ou deuxième buse de sortie ;
- on focalise le faisceau annexe en ladite zone annulaire de focalisation au moyen d'un deuxième moyen de focalisation.
- à l'étape (b), on divise le faisceau laser principal au moyen du premier moyen optique en un faisceau central focalisant en ledit point de focalisation et en un faisceau périphérique de forme annulaire ou cylindrique, guidé ou convoyé vers le deuxième moyen de focalisation permettant de focaliser le faisceau périphérique en la zone de focalisation de forme annulaire.
- le faisceau central et le faisceau périphérique sont guidés ou focalisés coaxialement l'un à l'autre.
- on focalise le faisceau central en un point de focalisation situé à proximité de la surface inférieure de la pièce à couper et on focalise ladite zone de focalisation à proximité de la surface supérieure de la pièce, dans l'épaisseur du matériau ou en dehors de celle-ci, de préférence le gaz de coupe utilisé est un gaz non-oxydant.
- on focalise le faisceau central en un point de focalisation situé à proximité de la surface supérieure de la pièce à couper et on focalise ladite zone de focalisation à proximité de la surface supérieure de la pièce, dans l'épaisseur du matériau ou en dehors de celle-ci, de préférence le gaz de coupe utilisé est un gaz oxydant.
- on alimente la première buse de sortie avec un gaz oxydant et la deuxième buse de sortie avec un gaz non-oxydant, et on découpe une pièce en acier, en aluminium ou en leurs alliages.
- on alimente la première buse de sortie avec un gaz non-oxydant et la deuxième buse de sortie avec un gaz non-oxydant, et on découpe une pièce en acier revêtu d'au moins une couche de polymère, de préférence un acier inoxydable.
- le gaz non-oxydant est de l'azote ou un mélange gazeux contenant majoritairement de l'azote et le gaz oxydant est de l'oxygène ou un mélange gazeux contenant de l'oxygène.
- on ajuste ou modifie la position relative d'au moins un de deux moyens de focalisation par rapport à l'autre, pour varier la position ou le lieu de focalisation du point de focalisation et/ou de la zone de focalisation dans l'épaisseur du matériau à couper.

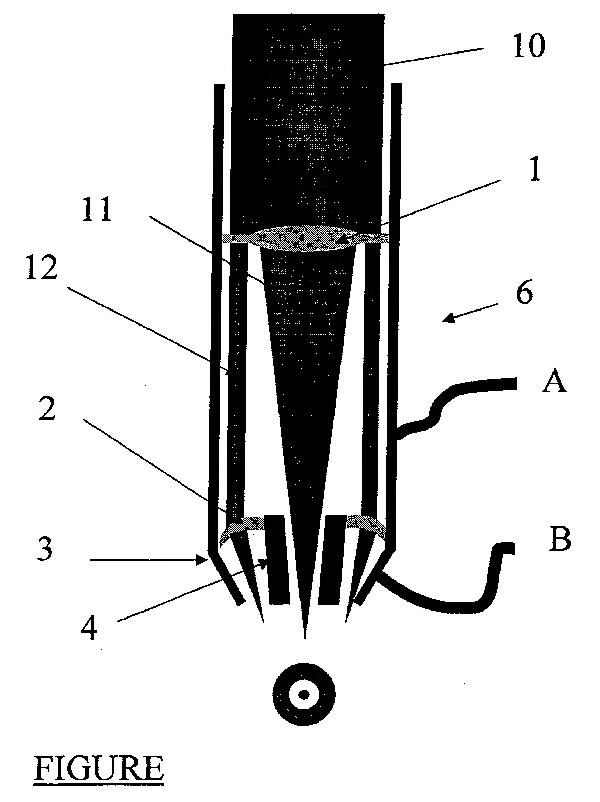

L'invention est illustrée sur la figure annexée qui représente la tête de découpe d'une installation de coupage par faisceau laser selon l'invention;

Plus précisément, on voit que le faisceau laser principal 10, généré par un générateur laser (non montré) de type CO2 ou Nd:YAG, est divisé ou scindé en deux faisceaux laser 11, 12 annexes en passant au travers d'un premier moyen optique 1, telle une lentille.

Le premier moyen optique 1 est agencé dans la tête 6 de coupe et permet d'obtenir une division du faisceau 10 en deux parties ou sous-faisceaux, à savoir un faisceau central 11, localisé en position centrale et un faisceau 12 périphérique de forme annulaire, c'est-à-dire cylindrique, situé en périphérie, les deux sous-faisceaux étant approximativement coaxiaux.

Le premier moyen optique 1 est préférentiellement une lentille comprenant une portion centrale ayant un rayon de courbure non nul sur une partie de son diamètre pour permettre la focalisation du faisceau 11 central et une portion périphérique formant couronne autour de ladite portion centrale et ayant un rayon de courbure nul pour l'obtention d'un faisceau non focalisé 12 qui est envoyé vers un deuxième moyen optique 2.

Une première buse de sortie 4 ou buse de coupe est traversée par le du faisceau 11 central et une deuxième buse de sortie 3 ou buse de chasse est traversée par le faisceau 12 périphérique, après sa focalisation par le deuxième moyen optique 2.

La première buse 4 est situé à l'intérieur de la tête 6, alors que la deuxième buse 3 est agencée du côté externe de la tête 6 et coaxialement à la première buse 4.

Le deuxième moyen optique 2, qui permet de focaliser le faisceau 12 périphérique ou annulaire après son passage au travers du premier moyen optique 1, est formé ici d'une lentille évidée en son centre de manière à pouvoir y fixer et y maintenir en position la buse de coupe 4.

Le faisceau central 11 traverse la première buse 4 et le faisceau périphérique 12 traverse la deuxième buse de sortie 3.

Le premier moyen optique 1 permet de focaliser le faisceau central 11 en un point de focalisation PF, alors que le deuxième moyen optique 2 permet de focaliser le faisceau périphérique 12 cylindrique en une zone annulaire de focalisation ZAF, c'est-à-dire en une couronne de forme annulaire, ladite zone annulaire de focalisation ZAF étant distincte du point de focalisation PF.

Le point de focalisation PF obtenu est situé à proximité de la surface inférieure ou supérieure de la pièce à couper et ce, en fonction de la nature du gaz de coupe employé par exemple, si le gaz est de l'oxygène alors le point de focalisation est préférentiellement focalisé vers la partie supérieure de la pièce, alors que si le gaz est de l'azote, alors le point de focalisation est préférentiellement focalisé vers la partie inférieure de la pièce.

Par ailleurs, la zone annulaire de focalisation ZAF est située, quant à elle, à proximité de la surface supérieure de la pièce, dans l'épaisseur du matériau ou en dehors de celle-ci.

En d'autres, la zone annulaire de focalisation ZAF est située, selon le cas, dans un plan supérieur à celui-ci passant par le point de focalisation PF et parallèle au plan de la surface de la pièce à couper, dans le cas d'une plaque à faces parallèles par exemple, dans un inférieur à celui-ci passant par le point de focalisation PF ou dans le même plan que celui du point de focalisation PF; dans ce dernier cas, le point de focalisation PF sera encerclé par la zone annulaire de focalisation ZAF.

De façon à assister l'action des faisceaux laser, on alimente la première buse 4 avec un gaz de coupe et la deuxième buse 4 avec un gaz de chasse issus de sources A et B, respectivement.

Dans le cas d'une pièce en acier de construction, le gaz de coupe issu de la source A est, par exemple, de l'oxygène, alors que le gaz de chasse issu de la source B est, par exemple, de l'azote. Cette façon de procéder permet d'éliminer ou minimiser la formation de la couche d'oxydes se formant habituellement, en cours de découpe, sur les faces de coupe.

A l'inverse, dans le cas d'une pièce en acier inoxydable revêtue d'un film plastique, le gaz de coupe issu de la source A et le gaz de chasse issu de la source B sont, par exemple, de l'azote. Dans ce cas, la productivité du procédé n'est pas pénalisée grâce à l'utilisation du procédé de l'invention.

De plus, la présence de la zone annulaire de focalisation ZAF en surface ou près de la surface de la pièce permet de supprimer, en temps réel, la pellicule plastique sans nécessiter de réaliser une passe préalable.

En d'autres termes, on choisit, selon l'invention, de réaliser une focalisation du faisceau périphérique 12 vers la surface supérieure de la pièce à couper ou à souder ou légèrement au-dessus de ladite surface supérieure, lorsque l'on souhaite réaliser un décapage de ladite surface ou une vaporisation d'un élément de revêtement présent sur celle-ci, par exemple une pellicule ou un film en polymère, ou une couche de zinc, respectivement.

A l'inverse, on choisit plutôt de réaliser une focalisation du faisceau périphérique 12 vers la surface inférieure de la pièce à couper ou dans l'épaisseur de ladite pièce, lorsque l'on souhaite obtenir une coupe exempte d'oxydes sur les bords de la saignée de coupe.

Le procédé de l'invention peut être utilisé pour couper ou souder des plaques, des tôles et des tubes, notamment des pièces ayant une épaisseur comprise entre 1 mm et 20 mm, voire plus en fonction du matériau à usiner et/ou de la puissance du laser utilisé.

## Revendications

1. Installation de coupage ou de soudage par faisceau laser comprenant:
- au moins un générateur laser pour générer au moins un faisceau laser principal (10),
- un premier moyen optique (1) permettant de diviser ledit faisceau laser principal (10) en au moins deux faisceaux laser (11, 12) annexes,
- au moins une première buse de sortie (4) traversée par au moins l'un (11) desdits faisceau laser annexes,
- au moins une deuxième buse de sortie (3) traversée par au moins l'autre (12) desdits faisceau laser annexes,
- lesdites première et deuxième buses de sortie (4, 3) étant approximativement coaxiales l'une à l'autre.

2. Installation selon la revendication 1, **caractérisée en ce que** ledit premier moyen optique (1) permet de diviser le faisceau laser principal (10) en un faisceau central (11) et un faisceau périphérique (12) de forme annulaire ou cylindrique, et de focaliser ledit faisceau central (11) en un point de focalisation (PF) et **en ce qu'**un deuxième moyen optique (2) permet de focaliser le faisceau périphérique (12) en une zone de focalisation (ZAF) de forme annulaire distincte du point de focalisation (PF).

3. Procédé de coupage ou soudage d'au moins une pièce métallique, dans lequel :
(a) on génère au moins un faisceau laser principal (10),
(b) on divise ledit faisceau laser principal (10) en au moins deux faisceaux laser (11, 12) annexes,
(c) on focalise ledit faisceau (11) en un point de focalisation (PF) au moyen d'un premier moyen (1) de focalisation,
(d) on focalise ledit faisceau (12) annexe en une zone de focalisation de forme annulaire (ZAF),
(e) on opère le coupage ou le soudage par fusion d'au moins une partie d'au moins une pièce au moyen desdits faisceaux annexes (11, 12).

4. Procédé selon la revendication 3, **caractérisé en ce que** :
- à l'étape (c), on guide l'un (11) desdits faisceau laser annexes au travers d'une une première buse de sortie (4) et on focalise ledit faisceau (11) en un point de focalisation (PF) au moyen d'un premier moyen (1) de focalisation, et
- à l'étape (d) on guide l'autre (12) desdits faisceau laser annexes au travers d'une deuxième buse de sortie (3) agencée approximativement coaxialement à la première buse de sortie (4) et on focalise ledit faisceau (12) annexe en une zone de focalisation de forme annulaire (ZAF).

5. Procédé selon l'une des revendications 3 ou 4, **caractérisé en ce qu'**on focalise le faisceau (12) annexe en ladite zone annulaire de focalisation (ZAF) au moyen d'un deuxième moyen (2) de focalisation.

6. Procédé selon l'une des revendications 3 à 5, **caractérisé en ce qu'**à l'étape (b), on divise le faisceau laser principal (10) au moyen du premier moyen optique (1) en un faisceau central (11) focalisant en ledit point de focalisation (PF) et en un faisceau périphérique (12) de forme annulaire ou cylindrique, guidé ou convoyé vers le deuxième moyen (2) de focalisation permettant de focaliser le faisceau périphérique (12) en la zone de focalisation (ZAF) de forme annulaire.

7. Procédé selon l'une des revendications 3 à 6, **caractérisé en ce que** le faisceau central (11) et le faisceau périphérique (12) sont guidés ou focalisés coaxialement l'un à l'autre.

8. Procédé selon l'une des revendications 3 à 7, **caractérisé en ce qu'**on focalise le faisceau central (11) en un point de focalisation (PF) situé à proximité de la surface inférieure de la pièce à couper et on focalise ladite zone de focalisation (ZAF) à proximité de la surface supérieure de la pièce, dans l'épaisseur du matériau ou en dehors de celle-ci, de préférence le gaz de coupe utilisé est un gaz non-oxydant.

9. Procédé selon l'une des revendications 3 à 7, **caractérisé en ce qu'**on focalise le faisceau central (11) en un point de focalisation (PF) situé à proximité de la surface supérieure de la pièce à couper et on focalise ladite zone de focalisation (ZAF) à proximité de la surface supérieure de la pièce, dans l'épaisseur du matériau ou en dehors de celle-ci, de préférence le gaz de coupe utilisé est un gaz oxydant.

10. Procédé selon l'une des revendications 3 à 9, **caractérisé en ce qu'**on alimente la première buse de sortie (4) avec un gaz oxydant et la deuxième buse de sortie (3) avec un gaz non-oxydant, et on découpe une pièce en acier, en aluminium ou en leurs alliages.

11. Procédé selon l'une des revendications 3 à 8, **caractérisé en ce qu'**on alimente la première buse de sortie (4) avec un gaz non-oxydant et la deuxième buse de sortie (3) avec un gaz non-oxydant, et on découpe une pièce en acier revêtu d'au moins une couche de polymère, de préférence un acier inoxydable.

12. Procédé selon l'une des revendications 3 à 11, **caractérisé en ce que** le gaz non-oxydant est de l'azote ou un mélange gazeux contenant majoritairement de l'azote et le gaz oxydant est de l'oxygène ou un mélange gazeux contenant de l'oxygène.

## Claims

1. Laser cutting or welding installation, comprising:
- at least one laser generator for generating at least one main laser beam (10);
- a first optical means (1) for splitting said main laser beam (10) into at least two ancillary laser beams (11, 12);
- at least a first output nozzle (4) through which at least one (11) of said ancillary laser beams passes; and
- at least a second output nozzle (3) through which at least the other (12) of said ancillary laser beams passes,
said first and second output nozzles (4, 3) being approximately coaxial with each other.

2. Installation according to Claim 1, **characterized in that** said first optical means (1) splits the main laser beam (10) into a central beam (11) and a peripheral beam (12) of annular or cylindrical shape and focuses said central beam (11) onto a focal spot (FS) and **in that** a second optical means (2) focuses the peripheral beam (12) onto a focal area (FA) of annular shape away from the focal spot (FS).

3. Method for cutting or welding at least one metal workpiece, in which:
(a) at least one main laser beam (10) is generated;
(b) said main laser beam (10) is split into at least two ancillary laser beams (11, 12);
(c) said beam (11) is focused onto a focal spot (FS) by means of a first focusing means (1);
(d) said ancillary beam (12) is focused onto a focal area (FA) of annular shape; and
(e) the cutting or welding operation is carried out by melting at least one part of at least one workpiece by means of said ancillary beams (11, 12).

4. Method according to Claim 3, **characterized in that**:
- in step (c), one (11) of said ancillary laser beams is guided through a first output nozzle (4) and said beam (11) is focused onto a focal spot (FS) by means of a first focusing means (1); and
- in step (d), the other (12) of said ancillary laser beams is guided through a second output nozzle (3) placed so as to be approximately coaxial with the first output nozzle (4) and said ancillary beam (12) is focused onto a focal area (FA) of annular shape.

5. Method according to either of Claims 3 and 4, **characterized in that** the ancillary beam (12) is focused onto said annular focusing area (FA) by means of a second focusing means (2).

6. Method according to one of Claims 3 to 5, **characterized in that**, in step (b), the main laser beam (10) is split by means of the first optical means (1) into a central beam (11) focusing onto said focal spot (FS) and into a peripheral beam (12) of annular or cylindrical shape, guided or sent towards the second focusing means (2) for focusing the peripheral beam (12) onto the focal area (FA) of annular shape.

7. Method according to one of Claims 3 to 6, **characterized in that** the central beam (11) and the peripheral beam (12) are guided or focused coaxially one with respect to the other.

8. Method according to one of Claims 3 to 7, **characterized in that** the central beam (11) is focused onto a focal spot (FS) located near the lower surface of the workpiece to be cut and said focal area (FA) is focused near the upper surface of the workpiece, in the thickness of the material or to the outside thereof, and preferably the cutting gas used is a non-oxidizing gas.

9. Method according to one of Claims 3 to 7, **characterized in that** the central beam (11) is focused onto a focal spot (FS) located near the lower surface of the workpiece to be cut and said focal area (FA) is focused near the upper surface of the workpiece, in the thickness of the material or to the outside thereof, and preferably the cutting gas used is a oxidizing gas.

10. Method according to one of Claims 3 to 9, **characterized in that** the first output nozzle (4) is supplied with an oxidizing gas and the second output nozzle (3) is supplied with a non-oxidizing gas, and a workpiece made of steel, aluminium or an alloy thereof is cut.

11. Method according to one of Claims 3 to 8, **characterized in that** the first output nozzle (4) is supplied with a non-oxidizing gas and the second output nozzle (3) is supplied with a non-oxidizing gas, and a workpiece made of steel coated with at least one polymer layer, preferably a stainless steel, is cut.

12. Method according to one of Claims 3 to 11, **characterized in that** the non-oxidizing gas is nitrogen or a gas mixture containing mainly nitrogen and the oxidizing gas is oxygen or a gas mixture containing oxygen.

## Patentansprüche

1. Laserschneid- oder -schweißanlage mit
- mindestens einem Lasergenerator zum Erzeugen mindestens eines Laserhauptstrahls (10),
- einem ersten optischen Mittel (1) zum Teilen des Laserhauptstrahls (10) in mindestens zwei Lasernebenstrahlen (11, 12),
- mindestens einer ersten, von mindestens einem (11) der Lasernebenstrahlen durchquerten Austrittsdüse (4),
- mindestens einer zweiten, von mindestens dem anderen (12) der Nebenlaserstrahlen durchquerten Austrittsdüse (3),
- wobei die erste und die zweite Austrittsdüse (4, 3) annähernd koaxial zueinander verlaufen.

2. Anlage gemäß Anspruch 1, **dadurch gekennzeichnet, dass** der Laserhauptstrahl (10) mit dem ersten optischen Mittel (1) in einen zentralen Strahl (11) und einen kreis- oder zylinderförmigen peripheren Strahl (12) geteilt und der zentrale Strahl (11) auf einen Fokussierungspunkt (PF) fokussiert werden kann und dass mit einem zweiten optischen Mittel (2) der periphere Strahl (12) auf einen vom Fokussierungspunkt (PF) getrennten Fokussierungsbereich (ZAF) fokussiert werden kann.

3. Verfahren zum Schneiden oder Schweißen mindestens eines Werkstücks aus Metall, bei dem:
(a) mindestens ein Laserhauptstrahl (10) erzeugt wird
(b) der Laserhauptstrahl (10) in mindestens zwei Lasernebenstrahlen (11, 12) geteilt wird,
(c) der Strahl (11) mit einem ersten Fokussierungsmittel (1) auf einen Fokussierungspunkt (PF) fokussiert wird,
(d) der Nebenstrahl (12) auf einen Fokussierungsbereich (ZAF) fokussiert wird,
(e) mit den Nebenstrahlen (11, 12) mindestens ein Teil mindestens eines Werkstückes geschnitten oder schmelzgeschweißt wird.

4. Verfahren nach Anspruch 3, **dadurch gekennzeichnet, dass**:
- in Schritt (c) einer der Lasernebenstrahlen durch eine erste Austrittsdüse (4) geführt und der Strahl (11) mit einem ersten Fokussierungsmittel (1) auf einen Fokussierungspunkt fokussiert wird und
- in Schritt (d) der andere Lasernebenstrahl (12) durch eine zweite annähernd koaxial zur ersten Austrittsdüse (4) angeordnete Austrittsdüse (3) geführt und der Nebenstrahl (12) auf einen ringförmigen Fokussierungsbereich (ZAF) fokussiert wird.

5. Verfahren nach einem der Ansprüche 3 oder 4, **dadurch gekennzeichnet, dass** der Nebenstrahl (12) mit einem zweiten Fokussierungsmittel (2) auf den ringförmigen Fokussierungsbereich (ZAF) fokussiert wird.

6. Verfahren nach einem der Ansprüche 3 oder 4, **dadurch gekennzeichnet, dass** der Laserhauptstrahl (10) in Schritt (b) mit dem ersten optischen Mittel (1) in einen zentralen, auf den Fokussierungspunkt (PF) fokussierenden Strahl (11) und in einen ring- oder zylinderförmigen peripheren Strahl (12) geteilt wird, wobei der Strahl (12) zu dem zweiten Fokussierungsmittel (2) geleitet oder geführt wird, mit dem er in den ringförmigen Fokussierungsbereich (ZAF) fokussiert werden kann.

7. Verfahren nach einem der Ansprüche 3 bis 6, **dadurch gekennzeichnet, dass** der zentrale Strahl (11) und der periphere Strahl (12) koaxial zueinander geführt oder fokussiert werden.

8. Verfahren nach einem der Ansprüche 3 bis 7, **dadurch gekennzeichnet, dass** der zentrale Strahl (11) auf einen einen nahe der Unterseite des zu schneidenden Werkstücks befindlichen Fokussierungspunkt (PF) fokussiert wird und der Fokussierungsbereich (ZAF) nahe der Oberseite des Werkstücks in der Dicke des Werkstoffs oder außerhalb fokussiert wird, wobei das verwendete Schneidgas vorzugsweise ein nicht oxydierendes Gas ist.

9. Verfahren nach einem der Ansprüche 3 bis 7, **dadurch gekennzeichnet, dass** der zentrale Strahl (11) auf einen nahe der Unterseite des zu schneidenden Werkstücks befindlichen Fokussierungspunkt (PF) fokussiert wird und der Fokussierungsbereich (ZAF) nahe der Oberseite des Werkstücks in der Dicke des Werkstoffs oder außerhalb fokussiert wird, wobei das verwendete Schneidgas vorzugsweise ein oxydierendes Gas ist.

10. Verfahren nach einem der Ansprüche 3 bis 9, **dadurch gekennzeichnet, dass** der ersten Austrittsdüse (4) ein oxydierendes Gas und der zweiten Austrittsdüse (3) ein nicht oxydierendes Gas zugeführt wird und dass ein Werkstück aus Stahl, Aluminium oder deren Legierungen geschnitten wird.

11. Verfahren nach einem der Ansprüche 3 bis 8, **dadurch gekennzeichnet, dass** der ersten Austrittsdüse (4) ein oxydierendes Gas und der zweiten Austrittsdüse (3) ein nicht oxydierendes Gas zugeführt wird und dass ein Werkstück aus mit mindestens einer Polymerschicht überzogenem Stahl, vorzugsweise rostfreiem Stahl, geschnitten wird.

12. Verfahren nach einem der Ansprüche 3 bis 11, **dadurch gekennzeichnet, dass** das nicht oxydierende Gas Stickstoff oder eine vorwiegend Stickstoff enthaltenden Gasmischung ist und das oxydierende Gas Sauerstoff oder eine Sauerstoff enthaltende Gasmischung ist.
